# EUROPÄISCHE PATENTANMELDUNG

(11) **EP 0 843 959 A1**
(43) Veröffentlichungstag der Anmeldung: **27.05.1998**
(21) Anmeldenummer: 97114030.6
(22) Anmeldetag: 14.08.1997
(51) Int. Cl.: A01D 41/12, G01F 1/66

(54) **Messvorrichtung zur Messung von Parametern in einer landwirtschaftlichen Maschine**

(30) Priorität: 21.11.1996 DE 19648126
(71) Anmelder: CLAAS KGaA, 33428 Harsewinkel (DE)
(72) Erfinder: Diekhans, Norbert, Dr., 33335 Gütersloh (DE)

(57) **Zusammenfassung**

Die Erfindung betrifft eine Meßvorrichtung zur Messung von Parametern in einer landwirtschaftlichen Maschine. Die bekannten Sensoren sollen durch einen Sensor verbessert werden, der möglichst wartungsfrei ohne mechanische Systeme und mit hoher Präzision arbeiten und förder- und gutspezifische Parameter wie Gutdurchsatz, Feuchtigkeit, Dichte, Masse etc. ermitteln kann. Als Lösung wird ein Mikrowellensensor vorgeschlagen, der an einer Stelle des Wegs des Ernteguts durch die Maschine plaziert ist.

## Beschreibung

Die Erfindung betrifft eine Meßvorrichtung zur Messung von Parametern in einer landwirtschaftlichen Maschine zur Aufnahme und Behandlung von Erntegut, bestehend aus einem Rahmen, einem Fahrwerk, einem Aufnahmevorsatz, zumindest einer Behandlungseinrichtung zur Behandlung des Ernteguts, Abgabevorrichtungen und Antriebseinrichtungen zum Antrieb der einzelnen Maschinenkomponenten.

In der Schrift DE 195 24 752 ist ein System beschrieben, wie durch die mechanische Erfassung der Höhe und Fördergeschwindigkeit eines sich durch eine landwirtschaftliche Maschine bewegenden Erntegutstromes eine volumetrische Durchsatzmessung zur Ermittlung der Ertagsmengen vorgenommen werden kann. Als zumindest teilmechanisches System unterliegen die bewegten Komponenten der Gutdurchsatz-Meßeinrichtung einem gewissen Verschleiß und müssen gewartet werden, was einigen Aufwand verursachen kann. Um ohne mechanische Komponenten den Durchsatz in einer Erntemaschine messen zu können, ist in der DE 41 05 857 ein kapazitives Meßsystem vorgeschlagen, das die Gutdurchsatzmenge mittels der Veränderung eines elektrischen Feldes mißt. Eine solche Vorrichtung liefert jedoch unter ungünstigen Bedingungen wie insbesondere einer hohen Feuchtigkeit Meßwerte, die hinsichtlich ihrer Genauigkeit nicht immer allen Anforderungen gerecht werden können. Im ASAE (American Society of Agricultural Engineers) Paper No. 951757 ist ein Ertragsmeßgerät für einen selbstfahrenden Feldhäcksler beschrieben, dessen Mengensensor auf Basis einer radioaktiven Strahlenquelle arbeitet. Neben einer - wenn auch geringen - Strahlenbelastung des Erntegutes ist insbesondere der Umgang mit dem radioaktiven Material des Sensors durch Bedienpersonal kritisch. Nachteilig aus dem Stand der Technik ist auch, daß die volumetrische Durchsatzmengenbestimmung nur annähernde Werte zur Massenbestimmung liefert. Wenn ein möglichst präziser Massenwert ermittelt werden soll, ist eine häufiges Wiegen der volumetrisch gemessenen Erntegutmengen erforderlich, um die Volumina in ein Verhältnis zum Gewicht setzen zu können, wonach die Meßsysteme entsprechend kalibriert werden müssen. Ein solcher Kalibriervorgang ist aufwendig, und selbst bei häufigem Kalibirieren können sich noch größere Meßungenauigkeiten ergeben.

Es ist deshalb die Aufgabe der vorliegenden Erfindung, eine Vorrichtung zu schaffen, die möglichst wartungsfrei ohne mechanische Systeme mit hoher Präzision den Gutdurchsatz und andere gut- oder förderspezifische Parameter mißt. Wegen der hohen Bedeutung des Anteils der Feuchtigkeit im Erntegut für die Massenbestimmung, für die Lager- und Verkaufsfähigkeit, aber auch für teilschlagspezifische Auswertungen der Ernteerträge, wäre es wünschenswert, wenn zusätzlich eine Ermittlung des Feuchtigkeitsanteils im Erntegut durch eine entsprechende Vorrichtung möglich wäre.

Die Aufgabe wird gelöst, indem an zumindest einer Stelle des Wegs des Erntegutes durch die Maschine durch zumindest einen Mikrowellensensor förder- und/oder gutspezifische Parameter bestimmbar sind. Unter einem Mikrowellensensor ist ein Sensor zu verstehen, dessen elektromagnetische Wellen im Frequenzbereich von ca. 0,5 GHz, unterhalb dessen die Radiowellen beginnen, bis zu 1.000 GHz, womit der Übergang zum Infrarotbereich erreicht ist, mit entsprechenden Wellenlängen von 1 m bis herunter zu ca. 0,5 mm arbeiten. Der Mikrowellensensor liefert Sensordaten, die von einer aus einem Mikroprozessor und einer geeigneten Software gebildeten Auswerteelektronik zu Daten, die das ermittelte Produkt aus Schichtdicke und Dichte im Förderkanal sowie die Feuchte repräsentieren, weiterverrechnet werden. Dabei arbeitet die Auswerteelektronik mit Gleichungssystemen, in denen die zu ermittelnden Parameter als Unbekannte enthalten sind und anhand der übermittelten Sensordaten berechenbar sind. Aus der Multiplikation der gemessenen Schichtdicke, der Dichte, der Förderkanalbreite und der Fördergeschwindigkeit kann die Durchsatzmenge berechnet werden. Aus den gemessenen Sensordaten kann weiter, wenn ein Korrekturfaktor bekannt ist, über eine weitere Multiplikation die exakte Masse des geförderten Gutdurchsatzes bestimmt werden. Der Korrekturwert selbst kann aus einem Speicher, der gutspezifische Korrekturwerte abrufbar gespeichert hat, über eine Kalibrierung mit Gegenwiegen oder durch manuelle Eingabe, alles ggfls. unter Nutzung des gemessenen Feuchtigkeitsgrades als Korrekturfaktor, vorgegeben werden. Unabhängig von der Korrektur ist ein Feuchtewert jedoch auch für andere landwirtschaftliche Auswertungen von Interesse. Die vorgeschlagene Vorrichtung unter Verwendung eines Mikrowellensensors kann ohne mechanische Komponenten arbeiten.

Zur Ermittlung mehrerer Parameter ist es vorteilhaft, über einen oder mehrere Mikrowellensensoren mehrere auswertbare Sensordaten zu ermitteln. Für mindestens zwei Sensordaten ist es vorteilhaft, wenn diese über die Auswertung der Dämpfung und Phasenverschiebung auf einer Frequenz, der jeweiligen Dämpfung auf zwei Frequenzen, der Dämpfung und Phasenverschiebung auf je einer Frequenz oder der jeweiligen Phasenverschiebung auf zwei Frequenzen ermittelt werden. Für mehr als zwei zu ermittelnde Sensordaten können die Meßparameter Dämpfung, Phasenverschiebung und Frequenzen nach Bedarf miteinander kombiniert werden.

In Abwandlung der Erfindung ist es auch denkbar, durch zumindest einen anderen Sensor, wie beispielsweise ein Drehzahl- oder - bei variablen Fördergeschwindigkeiten - einen Geschwindigkeitssensor an einer Behandlungseinrichtung für das Erntegut, die Durchflußgeschwindigkeit des Ernteguts durch die Maschine zu ermitteln und durch Verrechnung der von den Mikrowellen- und anderen Sensoren ermittelten Werte durch eine Auswerteelektronik die Gutdurchsatzmenge zu bestimmen.

Ein Mikrowellensensor wird in einer bevorzugten Ausgestaltung der Erfindung so in einer Wandung der landwirtschaftlichen Maschine plaziert, daß er in den stehenden oder bewegten Erntegutstrom elektromagnetische Wellen aussendet, die Dämpfung und/oder die Phasenverschiebung dieser Mikrowellen auf einer oder mehreren Frequenzen von zumindest einer Antenne gemessen werden und die von der Antenne gemessenen Sensordaten von einer Auswerteelektronik auswertbar sind. Die Auswertung der Schichtdicke kann vorgenommen werden, indem anhand der Transmission in einem zweiten Frequenzband über eine Eichkurve Rückschlüsse auf die Schichtdicke erfolgen.

Durch die erfindungsgemäße Sensorik kann auch die Dichte beziehungsweise verrechnet die Masse und/oder die Feuchtigkeit des stehenden oder bewegten Erntegutes in der Maschine mit einem Mikrowellensensor bestimmt werden. Dazu sendet ein Mikrowellensensor auf einer ersten Frequenz (L1), deren Dämpfung in erster Linie ein Maß für die Dichte ist, und auf einer zweiten Frequenz L2, deren Dämpfung zur Feuchte des Materials korreliert.

Bevorzugt werden die Mikrowellen in einem größeren Frequenzband ausgesendet, die Absorption wird in speziellen engeren Frequenzbändern ermittelt und daraus können dann Rückschlüsse über die Zusammensetzung des Erntegutes gezogen werden. Auch hier ist dann die Absorption in einem ersten Frequenzbereich (L1) ein Maß für die Dichte und in einem zweiten Frequenzbereich (L2) ein Maß für die Feuchtigkeit des Materials. Die Feuchtemessung kann aber auch in nur einem Frequenzbereich indirekt über die veränderte Laufzeit von Mikrowellen (GHz) (Phasenverschiebung) und die Massenbestimmung über die Dämpfung erfolgen.

In weiterer bevorzugter Ausgestaltung der Erfindung sollte zumindest ein Feuchtefühler an einer Stelle des Wegs des Erntegutes durch die landwirtschaftliche Maschine angeordnet sein. Bevorzugt wird die Feuchtemessung aus den Sensordaten eines Mikrowellensensors abgeleitet. Der Feuchtefühler kann aber auch nach einem anderen Verfahren als dem Mikrowellenverfahren arbeiten. Die Feuchtemessung sollte dabei nach der Behandlung des Erntegutes durch eine Behandlungseinrichtung in der Maschine erfolgen. Dabei kann es ausreichen, nur die Oberflächenfeuchte des Erntegutes zu ermitteln. Die Oberflächenfeuchte kann anstelle eines Mikrowellensensors wahlweise auch durch Infrarotsensoren ermittelt werden, deren Meßwerte mit den Meßwerten der übrigen Mikrowellensensoren in einer elektronischen Auswerteeinheit kombinierbar sind.

Im folgenden wird die Erfindung anhand eines Ausführungsbeispiels erläutert. Es zeigen:
- Figur 1: einen selbstfahrenden Feldhäcksler in der Seitenansicht,
- Figur 2: eine Prinzipschaltung eines Synchrondetektors,
- Figur 3: eine Prinzipschaltung eines Quadraturdetektors,
- Figur 4: einen Längsschnitt durch eine Teilsansicht eines Elevators in einem Mähdrescher.

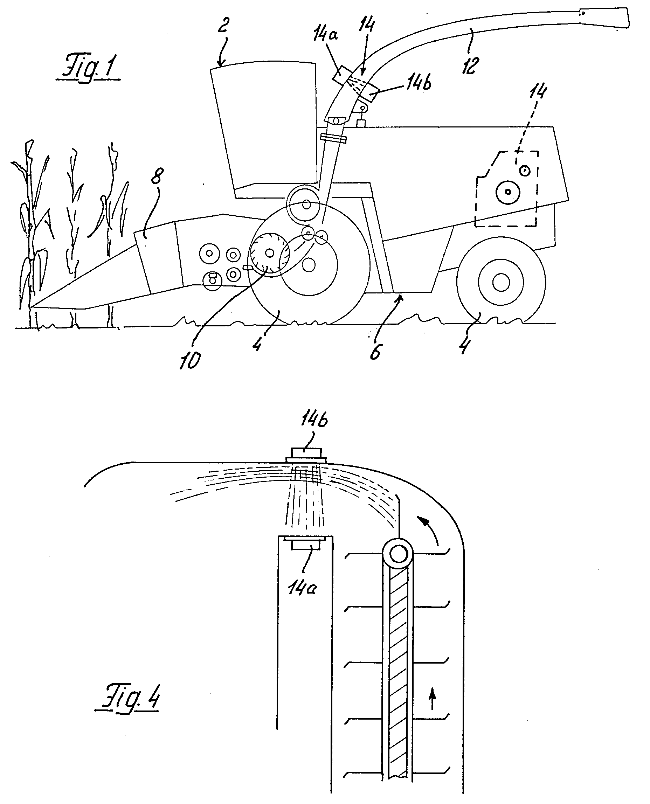

Figur 1 zeigt eine schematische Darstellung eines Mikrowellensensors in einem selbstfahrenden Feldhäcksler 2 als Beispiel für eine landwirtschaftliche Maschine. Der selbstfahrende Feldhäcksler 2 ist ausgestattet mit einem Fahrwerk 4, einem Fahrzeugrahmen 6, einem Aufnahmevorsatz 8, einer Behandlungsvorrichtung in Form einer Häckselvorrichtung 10, einer Abgabevorrichtung in Form eines Auswurfkrümmers 12 sowie einem Motor 14 zum Antrieb der Arbeitsorgane und Maschinenkomponenten. Am Auswurfkrümmer 12 ist ein Mikrowellensensor 14 angebracht, der aus einer Sendeeinheit 14a und einer Empfangseinheit beziehungsweise Antenne 14b besteht. Der Feldhäcksler schneidet im bestimmungsgemäßen Einsatz mit dem Aufnahmevorsatz 8 das Erntegut ab und befördert es zur Einzugsöffnung. Dort wird es durch Vorpreßwalzen verdichtet und kontinuierlich der Häckselvorrichtung 10 zugeführt, die mit einer rotierenden Messertrommel das zugeführte Erntegut an einer Gegenschneide schneidet,beschleunigt und in den Förderschacht schleudert. Das Erntegut wandert als Gutstromdurch den Förderschacht hinauf zum Auswurfkrümmer 12, an dessen Abgabeende es dann in Richtung eines Ladefahrzeugs ausgeworfen wird. Bei kontinuierlicher Vorfahrt des Feldhäckslers 2 in ein Feld mit Erntegut ergibt sich innerhalb des Feldhäckslers 2 ein annähernd konstanter Strom von Erntegut, der sich mit hoher Geschwindigkeit durch die Maschine hindurch bewegt. Je nach Beschaffenheit des Ernteguts und Witterungsbedingungen vor und während der Ernte können sich unterschiedliche Feuchtigkeitsgrade und spezifische Gewichte des bearbeiteten Erntegutes ergeben. Moderne Feldhäcksler erreichen durchaus Durchsatzleistungen von 150 t und mehr Erntegut pro Stunde. Die Menge des durchfließenden Erntegutes und dessen schwankende Eigenschaften machen es schwierig, die Durchsatzmenge möglichst exakt zu bestimmen.

Unter Einhaltung bestimmter Randbedingungen erlauben die physikalischen Eigenschaften des Ernteguts nahezu eindeutige Messungen im Mikrowellenbereich auch im kontinuierlichen Betrieb. Der für die dielektrischen Verluste verantwortliche Imaginärteil der Dielektrizitätskonstante steigt erst ab Frequenzen oberhalb 1 GHz nennenswert an, insofern ist eine Dämpfungsmessung (Transmission) bzw. eine Reflexionsfaktor-Betragsmessung erst ab dieser Frequenzhöhe sinnvoll. Mikrowellen-Meßverfahren bieten ein gutes Verhältnis von erzielbarer Meßgenauigkeit, Meßgeschwindigkeit und technischen Aufwand. Sie ermöglichen eine einfache Handhabung der Meßapparatur und sind außerdem für das Bedienpersonal ungefährlich. Sie verändern das Meßgut nicht und gestatten auch berührungslose Messungen. Mikrowellenverfahren nutzen die von der Dielektrizitätskonstanten des Meßguts abhängige Änderung der Phasenkonstante (Ausbreitungsgeschwindigkeit) und Dämpfungskonstante elektromagnetischer Wellen im GHz-Bereich beim Durchlaufen des zu untersuchenden Meßgutes. Die Dämpfungs- und Phasenkoeffizienten der Mikrowellensensoren bei Erntegut sind abhängig von den Parametern Temperatur, Leitfähigkeit, Dichte und Feuchte. Während unter Extrembedingungen (niedrige Temperaturen, hohe Leitfähigkeiten) die Auswertung von Sensordaten schwierig wird, sind aus der wissenschaftlichen Forschung Formeln bekannt, die bei Zugrundelegung bekannter Dielektrizitätskonstanten von Stoffen unter Normalbedingungen die Beziehungen für Dämpfungs- und Phaserkoeffizienten mit einer hohen Genauigkeit beschreiben.

Die Mikrowellenverfahren können für Messungen von Erntegutströmen als Transmissions-, Reflexions-, Doppler-Radar- oder Puls-Radarverfahren realisiert werden.

Beim Transmissionsverfahren befindet sich das Erntegut innerhalb einer Übertragungsstrecke zwischen zwei Mikrowellenantennen (14a) und (14b). Beim Durchlaufen des Erntegutes ändert sich einerseits die Phasenlage der Mikrowellen entsprechend der materialabhängigen Laufzeit, andererseits ist die auf der Empfängerseite meßbare Mikrowellenleistung neben der materialabhängigen Grunddämpfung der Übertragungsstrecke von der dielektrischen Dämpfung im Meßgut abhängig. Aus der Phasenverschiebung und der Dämpfung der Mikrowellen lassen sich die Phasenkonstante und die Dämpfungskonstante separat bestimmen, sodaß eine getrennte Ermittlung von Parametern wie beispielsweise Durchsatz und Gutfeuchte möglich ist. Bei diesem Verfahren ist eine gleichmäßige Empfindlichkeit in Richtung der Meßstrecke von vornherein gegeben. Eine ausreichende laterale Homogenität muß durch die Verwendung von Antennenstrukturen mit entsprechender Abstrahlfläche und Richtcharakteristik sichergestellt werden. Dies kann durch Antennen mit ensprechend großer Apertur oder durch Zeilen- oder Gruppenanordnung einzelner Antennen erfolgen. Bei Ansatz relevanter Vergleichswerte (Meßstrecke 0,3 m, Volumenanteil Wasser 10 - 40 %, Temperatur 10 - 60°C, Frequenz 2,45 GHz) ergibt sich ein für die Dämpfungsmessung praktikabler Dynamikbereich von 5 - 20 dB und Änderungen der Phasenkonstante um den Faktor 3.

Bei Reflexionsmessungen wird dieselbe Mikrowellenantenne (14a) als Sender und Empfänger verwendet. Meßgröße ist die sogenannte komplexe Fußpunktimpedanz der Antenne bzw. der am Fußpunkt sich einstellende komplexe Reflexionsfaktor. Die Fußpunktimpedanz ist für eine gegebene Antennengeometrie von den dielektrischen Materialeigenschaften des Erntegutes abhängig, wobei für ihren Wert im wesentlichen die Verhältnisse in der Umgebung der Antenne maßgeblich sind. Eine auf den Querschnitt des Auswurfkrümmers (12) oder eines Elevators bezogene Aussage über den Durchsatz ist daher nur schwer möglich, dementsprechend eignet sich dieses Verfahren eher für die Bestimmung der Feuchtigkeit des Erntegutes.

Für ein Doppler-Radarverfahren kann beispielsweise eine Gunn-Diode ein schwaches kontinuierliches Mikrowellensignal aussenden, das von durchströmenden Erntegut reflektiert wird. Von einem Sensor kann dann die Stärke der reflektierten frequenzverschobenen Energie ermittelt werden. Die reflektierte Strahlung hat eine Dopplerfrequenz, die proportional zur Geschwindigkeit des Schüttgutes ist. Aus der Stärke des Dopplersignals als Sensorsignal kann also die Geschindigkeit des durchströmenden Gutes ermittelt werden. Bei einer weitergehenden Auswertung der reflektierten Strahlung hinsichtlich der Schichtdicke des durchströmenden Erntegutes ergibt sich der Vorteil, daß nur das tatsächlich durchströmende Erntegut als Schichtdicke erfaßt wird. Damit wären bei diesem Verfahren Verfälschungen des Meßwertes durch an Seitenwänden anhaftende immobile Gutfraktionen ausgeschlossen.

Eine weitere Möglichkeit stellt der Einsatz des Puls-Radar-Verfahrens dar. Im Impuls-Echo-Betrieb sind Sendeimpuls und empfangenes Echo zeitlich getrennt und über elektrische Torschaltungen separat meßbar. Unter der Voraussetzung einer Totalreflexion an einer der Antenne gegenüberliegenden metallischen Begrenzungsfläche (Wand des Auswurfkrümmers 12 oder eines Elevators) gelten dieselben Überlegungen wie für das Transmissionsverfahren. Unter Beachtung der doppelten Streckenlänge für Hin- und Rückweg im untersuchten Medium können aus der Impulslaufzeit die Ausbreitungsgeschwindigkeit im Medium und aus der Impulshöhe die Dämpfungskonstante des Mediums ermittelt werden. Das Puls-Radar-Verfahren hat den Vorteil, nur eine Antennenstruktur bzw. nur eine Kontaktfläche zum Meßgut zu benötigen und trotzdem relativ leicht überschaubar zu sein. Der schaltungstechnische Aufwand (schnelle Torschaltungen) dürfte etwa dem der kombinierten Dämpfungs- und Phasenmessung gleich sein, erfordert jedoch eine völlig andere Schaltungstechnik. Die Wechselwirkung mit dem Meßgut ist auf kurze Zeitintervalle beschränkt, die allerdings mit einer ausreichenden Pulsfrequenz wiederholt werden können. Als Nachteil ist vorstellbar, daß die doppelte Meßstrecke auch die doppelte Dämpfung bedingt, wodurch unter Umständen ein sehr großer Dynamikbereich zu überstreichen ist.

Sollen mehrere Parameter bestimmt werden, besteht die Gefahr, daß sich bei Messungen in nur einem Frequenzbereich die statistischen Fehler durch Reflexionen an Inhomogenitäten und Grenzflächen im Erntegutstrom und maschinenseitige Vibrationen doppelt auswirken. Um mögliche Fehler zu "glätten", ist es deshalb vorteilhaft, mehrere Frequenzbereiche auszuwerten. Für eine Dämpfungsmessung könnte eine sinnvolle Meßfrequenz bei etwa 10 GHz liegen. Es ist allerdings zu beachten, daß die Partikelgröße des Erntegutes einen Einfluß hat auf die Streuung der Mikrowellen und die Wellenlänge so gewählt sein sollte, daß die Fehlerfaktoren möglichst gering sind. Bei einer mittleren Partikelgröße von 3 bis 5 mm läge beispielsweise eine sinnvolle Meßfrequenz im Bereich von 2 bis 3 GHz. In diesem Meßbereich kann dann die Dämpfung (Betrag Reflexionsfaktor) und die Phasenverschiebung des transmittierten bzw. reflektierten Signals gemessen werden. Die zweite Meßfrequenz sollte einen größeren Abstand zur ersten Meßfrequenz haben, damit die frequenzabhängigen statistischen Meßunsicherheiten nicht mehr ins Gewicht fallen. Soll aufgrund der Zulassungs- und EMV-Bestimmungen ein sogenanntes ISM-Band für beide Frequenzen genutzt werden, bieten sich für die zweite Frequenz beispielsweise 40,68 oder 433 MHz an. Aufgrund der geringen Abmessungen des Meßraumes wäre die Frequenz von 433 MHz vorzuziehen.

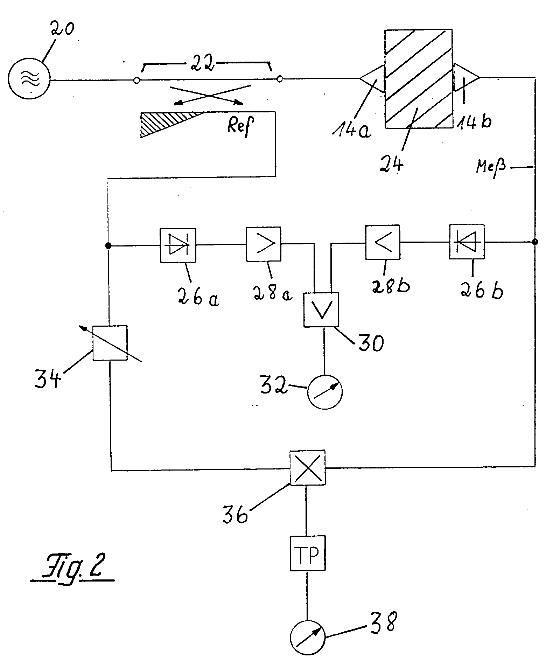

In Figur 2 ist eine beispielhafte Auslegung eines Mikrowellensensors für den Einsatz in einer landwirtschaftlichen Maschine dargestellt. Ein Breitband-Oszillator 20 (oder zwei einzelne Oszillatoren) erzeugt die Meßfrequenz. Eine Ausgangsleistung der Signalquelle von beispielsweise 10 mW könnte für die Meßzwecke schon ausreichen. Da eine Phasenmessung notwendig ist, werden die Frequenzen durch einen Phasenregelkreis (PLL) mittels eines Richtkopplers 22 stabilisiert. Zur vektoriellen Messung des Transmissionsfaktors zur Bestimmung der Meßgrößen Dämpfung und Phasenverschiebung im zu messenden Erntegutstrom 24 bieten sich mehrere Verfahren an. So kann beispielsweise das Meßsignal mit einem in der Frequenz versetzten Lokaloszillator-Signal gemischt und in der Zwischenfrequenz (ZF)-Ebene weiterverarbeitet werden. Dort erfolgt dann die Auswertung der Amplitude nach einer Detektion und Verstärkung durch Detektoren oder direkte AD-Wandlung. Durch eine zweite Verstärkung und Mischung können auch sehr niedrige Pegel ermittelt werden. Ein anderes Verfahren besteht darin, das vom Empfangssensor (14b) empfangene Signal mit dem in die Meßstrecke eingespeisten Signal zu mischen, so daß beide Signale dieselbe Frequenz haben und das für die Messung verwertete Seitenband der Zwischenfrequenz ZF die Frequenz 0 hat.

Die beispielhafte Auslegung in Figur 2 zeigt eine Prinzipschaltung eines Synchrondetektors mit einem Oszillator 20, einem Richtkoppler 22, und einer Sende- und Empfangsantenne 14a, 14b. Das eingekoppelte Referenzsignal (Ref) und das dämpfungsbehaftete Meßsignal (Meß) werden jeweils über einen Detektor 26a, 26b und Vorverstärker 28a, 28b und Verstärker 30 einer Amplitudenanzeige 32 an der eine dem Dämpfungsfaktor entsprechende Spannung anliegt, zugeführt. Das Zwischenfrequenzsignal ZF hat (mindestens) zwei Anteile, die entsprechend der Theorie der Mischung bei der Differenz- und der Summenfrequenz liegen. Das Summensignal aus dem Multiplizierer 36 wird mit einem Tiefpaßfilter TP ausgefiltert. Das Differenzsignal trägt die Amplituden- und Phaseninformation des Meß- und Referenzsignals. Bei stabiler Amplitude und Phasenlage des Referenzsignals ändert sich das Differenzsignal in Abhängigkeit von den Änderungen des Meßsignals. Zur Trennung der Amplituden- und Phaseninformation im Hochfrequenzzweig HF wird die Amplitude des Referenzsignals über ein Dämpfungsglied 34 soweit abgeregelt, daß sie genauso groß ist wie die Amplitude des Meßsignals. Die Steuerspannung des Dämpfungsglieds kann dann als Äquivalent für die Amplitude des Meßsignals gemessen werden. Alternativ ist auch eine geregelte Verstärkung des Meßsignals auf den Pegel des Referenzsignals denkbar. Der Betrag des Reflexionsfaktors ergibt sich als Quotient aus der Meß- und Referenzspannung. Die Phase des Reflexionsfaktors wird durch die Ausgangsspannung des Multiplizierers 36 wiedergegeben. An der Amplitudenanzeige 38 liegt dann eine dem Phasenverschiebungsfaktor entsprechende Spannung an. In einer praktischen Anordnung müssen die Einzelkomponenten voneinander isoliert und für den Abgleich des Systems sowohl im Referenz- als auch im Meßzweig zusätzliche Dämpfungsglieder und Phasenschieber eingefügt werden.

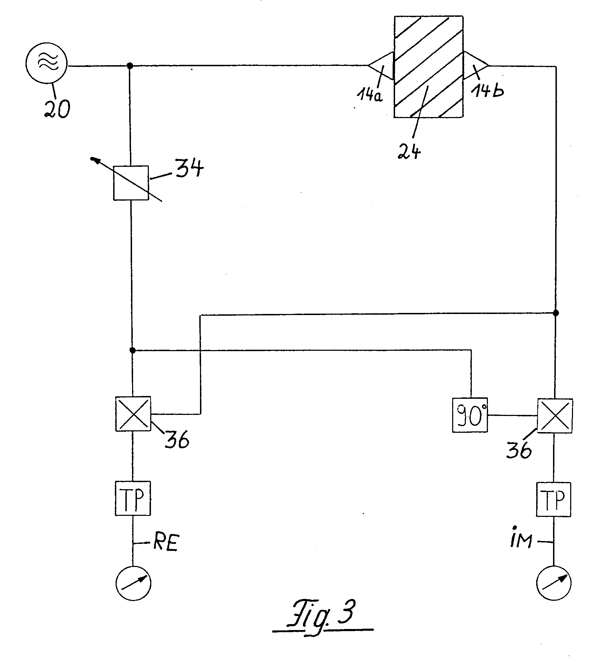

Figur 3 zeigt eine Prinzipschaltung für einen Quadraturdetektor. Hier wird das Oszillatorsignal in den Empfangskanälen um 90° versetzt, d.h. in Quadratur, den Multiplizierern 36 als Lokal-oszillator-Signal zugeführt. Durch die multiplikative Mischung wird das komplexe Empfangssignal - charakterisiert durch Betrag und Phase, d.h. einen komplexen Zeiger - in seinen Realteil und Inmaginärteil (die kartesische Form) umgewandelt. Die Selektion übernehmen die Tiefpässe TP, die das entstehende obere Seitenband (Summenfrequenz) ausfiltern. Aus den Werten für Realteil RE und Imaginärteil IM können durch einfache komplexe Rechenoperationen die Werte für Dämpfung und Phasenverschiebung unter Bezugnahme auf das Lokaloszillator-Signal als Referenzwert ermittelt werden.

Die Ausgangssignale jedes beschriebenen Mikrowellensensors liegen in analoger Form vor. Zur digitalen Weiterverarbeitung müssen die Signale verstärkt und A/D-gewandelt werden. Zur Verringerung möglicher Fehler sollten die Signale auch mit Temperaturwerten des Erntegutes verrechnet werden, die über eine geeignete Sensorik zusätzlich ermittelbar sind. Bei den zu erwartenden Meßgeschwindigkeiten sollte ein Signalprozessor zur Auswertung der digitalisierten Signale verwendet werden, der mit einem Mikrocontroller gekoppelt sein kann. Diese digitalen Baugruppen steuern und schalten die Frequenz des PLL-Oszillators, sie bestimmen die Dämpfung und Phasenverschiebung bei den Meßfrequenzen, sie ermitteln die Gutfeuchte und/oder die Meßgutdichte aus diesen Werten und berechnen den Durchsatz aus der Umrechnung des Volumens, sie nehmen gut- und temperaturabhängige Korrekturen der Meßwerte vor, sie erfüllen eine Schnittstellen-Funktion und können eine Meßstellen-Umschaltung bei mehreren Applikatoren vornehmen. Über eine Schnittstelle werden dann einer nachgeordneten Auswerteelektronik die Sensordaten für die Parameter wie beispielsweise Gutfeuchte, Durchsatz und/oder Guttemperatur übermittelt.

Figur 4 zeigt eine beispielhafte Anordnung eines Mikrowellensensors in einem nicht näher dargestellten Mähdrescher. Zu erkennen ist das Elevatorgehäuse, in dem an einer umlaufenden Kette befestigte Förderpaddel das Erntegut fördern und durch den Elevatorauswurf in den Korntank werfen. Es wird vorgeschlagen, die Antennen des Mikrowellensensors an den seitlichen Begrenzungswänden des Elevatorauswurfs zu befestigen. Auf die gleiche Art und Weise können ein oder mehrere Mikrowellensensoren auch an anderer Stelle des Förderwegs von Erntegut in einer landwirtschaftlichen Maschine angebracht sein.

Die vorstehende Beschreibung erläutert die Verwendung eines Mikrowellensensors zur Messung von Parametern in Erntegut. Es versteht sich jedoch von selbst, daß neben dem Erntegut in gleicher oder zweckgemäß leicht abgewandelter Weise auch Parameter von anderen feuchten oder trockenen Medien, wie beispielsweise Gülle, Düngemittel, Saatgut, Pflanzenschutzmittel, etc. mit dem erfindungsgemäßen Verfahren bestimmbar sind.

## Patentansprüche

1. Meßvorrichtung zur Messung von Parametern in einer landwirtschaftlichen Maschine zur Aufnahme und Behandlung von Erntegut, bestehend aus einem Rahmen, einem Fahrwerk, einem Aufnahmevorsatz, zumindest einer Behandlungseinrichtung zur Behandlung des Ernteguts, Abgabevorrichtungen und Antriebseinrichtungen zum Antrieb der einzelnen Maschinenkomponenten,
**dadurch gekennzeichnet**,
daß an zumindest einer Stelle des Wegs des Erntegutes durch die Maschine durch zumindest einen Mikrowellensensor förder- und/oder gutspezifische Parameter bestimmbar sind.

2. Vorrichtung nach Anspruch 1,
**dadurch gekennzeichnet**,
daß mindestens zwei Sensordaten zur Bestimmung von förder- und/oder gutspezifischen Parametern von zumindest einem Mikrowellensensor über die Auswertung der Dämpfung und Phasenverschiebung auf einer Frequenz, der jeweiligen Dämpfung auf zwei Frequenzen, der Dämpfung und Phasenverschiebung auf je einer Frequenz oder der jeweiligen Phasenverschiebung auf zwei Frequenzen ermittelt sind.

3. Vorrichtung nach Anspruch 1 oder 2,
**dadurch gekennzeichnet**,
daß durch zumindest einen anderen Sensor die Durchflußgeschwindigkeit des Ernteguts durch die Maschine ermittelt und durch Verrechnung der von den Mikrowellen- und anderen Sensoren ermittelten Werte durch eine Auswerteelektronik die Gutdurchsatzmenge bestimmt wird.

4. Vorrichtung nach einem der Ansprüche 1 bis 3,
**dadurch gekennzeichnet**,
daß zumindest ein Mikrowellensensor so in einer Wandung der landwirtschaftlichen Maschine plaziert ist, daß er in den stehenden oder bewegten Erntegutstrom elektromagnetische Wellen aussendet, die Dämpfung und/oder der Phasenverschiebung dieser Mikrowellen auf einer oder mehreren Frequenzen von zumindest einer Antenne gemessen werden und die von der Antenne gemessenen Sensordaten von einer Auswerteelektronik auswertbar sind.

5. Vorrichtung nach einem oder mehreren der Ansprüche 1 bis 4,
**dadurch gekennzeichnet**,
daß die Bestimmung der Schichtdicke vorgenommen wird, indem anhand der Transmission in einem zweiten Frequenzband über eine Eichkurve Rückschlüsse auf die Schichtdicke erfolgen.

6. Vorrichtung nach einem oder mehreren der Ansprüche 1 bis 5,
**dadurch gekennzeichnet**,
daß eines der zu bestimmenden Parameter der Feuchtigkeitsgehalt des zu fördernden Erntegutes ist.

7. Vorrichtung nach einem oder mehreren der Ansprüche 1 bis 6,
**dadurch gekennzeichnet**,
daß ein Mikrowellensensor auf einer ersten Frequenz L1, deren Dämpfung in erster Linie ein Maß für die Dichte ist, und auf einer zweiten Frequenz L2 sendet, deren Dämpfung zur Feuchte des Materials korreliert.

8. Vorrichtung nach einem der Ansprüche 1 bis 7,
**dadurch gekennzeichnet**,
daß Mikrowellen in einem größeren Frequenzband ausgesendet werden und daß die Absorption in speziellen engeren Frequenzbändern ermittelt wird und daraus Rückschlüsse über die Zusammensetzung des Gutes gezogen werden.

9. Vorrichtung nach Anspruch 8,
**dadurch gekennzeichnet**,
daß die Absorption in einem ersten Frequenzbereich L1 ein Maß für die Dichte und in einem zweiten Frequenzbereich L2 ein Maß für die Feuchtigkeit des Materials ist.

10. Vorrrichtung nach einem oder mehreren der Ansprüche 1 bis 9,
**dadurch gekennzeichnet**,
daß die Feuchtemessung indirekt über die veränderte Laufzeit von Mikrowellen (1 GigaHz) (Phasenverschiebung) und die Massenbestimmung über die Dämpfung erfolgt.

11. Vorrichtung nach einem oder mehreren der Ansprüche 1 bis 10,
**dadurch gekennzeichnet**,
daß an einer Stelle des Wegs des Ernteguts durch die Maschine ein separater Feuchtefühler angeordnet ist.

12. Vorrichtung nach Anspruch 11,
**dadurch gekennzeichnet**,
daß die Feuchtemessung nach einer Behandlung des Ernteguts in der Maschine erfolgt.

13. Vorrichtung nach den Ansprüchen 11 und 12,
**dadurch gekennzeichnet**,
daß die Oberflächenfeuchte des Ernteguts ermittelt wird.

14. Vorrichtung nach einem oder mehreren der Ansprüche 1 bis 13,
**dadurch gekennzeichnet**,
daß die Oberflächenfeuchte mit Infrarotsensoren ermittelt wird.
